# EUROPEAN PATENT APPLICATION

(11) **EP 3 514 930 A1**
(43) Date of publication of application: **24.07.2019**
(21) Application number: 18152996.7
(22) Date of filing: 23.01.2018
(51) Int. Cl.: H02M 1/38, H02M 3/158, H02M 1/00

(54) **METHOD TO OPTIMALLY CONTROL DEAD TIMES OF A SYNCHRONOUS BUCK CONVERTER**

(71) Applicant: IDT Europe GmbH, 01109 Dresden (DE)
(72) Inventor: TAVANO, Giuseppe, 85354 Freising (DE); MEOLA, Marco, 80638 München (DE)
(74) Representative: Lippert Stachow Patentanwälte Rechtsanwälte Partnerschaft mbB

(57) **Abstract**

The invention discloses a method of controlling dead times of a synchronous buck converter and an apparatus implementing the inventive method. The object of the invention to find an alternative approach to optimize dead times for a wide range of power transistors as well as to increase the efficiency of power conversion especially in the case of high switching frequency operation will be solved by measuring a time a switching node voltage level between a high-side power switch and a low-side power switch of the buck converter is lower than a predetermined voltage threshold at a N switching period; comparing said time to a minimum dead time value, resulting in an error value; and processing the error value by adjusting a programmable reference voltage V_{ref_cp} of a comparator of a dead time management unit and comparing it with a voltage ramp V_{saw} and determining a dead time value to be applied to the N+l switching period

## Description

The invention relates to a method of controlling dead times of a synchronous buck converter and an apparatus implementing the inventive method.

The related invention refers to a gate driver circuit for synchronous buck converters. In synchronous buck converters the high-side and low-side power transistors are actively controlled by a gate drive circuitry to maximize the energy transfer of the converter from the input voltage Vᵢₙ to the output voltage Vₒᵤₜ.

When using synchronous rectification in a buck converter, the intrinsic low-side MOSFET body diode can have quite an impact on the power converter losses when both power transistors are not driven properly.

In fact the body diode, when brought into conduction, produces an increase of the total losses. This is noticeable especially during the low-side off to high-side on transition, where a finite amount of time tᵣᵣ is required to turn the low-side power transistor off before the high-side power transistor is turned on. During this period the excess of charge carriers that were injected into the p-n region of the body diode to turn it on have to be removed originating a current Iᵣᵣₘ. This current is strongly dependent on load current, temperature, forward current and conduction period. The Iᵣᵣₘ*tᵣᵣ product increases the peak current occurring at the switching instant as well as the switching time, thus resulting in an increase of switching loss.

To maximize the efficiency of the converter dead times, i.e. time intervals between the turning on/off instant of a power transistor and the turning off/on instant of its mutual power transistor are used.

To efficiently control dead times, the high-side and low-side turn on time of the switches must be adjusted to avoid 1) body diode conduction due to too long dead times; and 2) current short-through due to mutual conduction of both power transistors.

In general gate drivers have no knowledge of the characteristics of power transistors being driven and therefore the dead time optimization mechanism must support a wide range of device size and process technologies often resulting in less than optimal performance.

To be able to support a wide range of different power transistors gate drivers implement a dead time adjustment mechanism. The target of the dead time adjustment mechanism is to find a set of optimal dead time values such that cross conduction and body diode conduction in the synchronous rectification are avoided. State of the art drivers adopt a dead-time adjustment mechanism, called break-before-make approach, based on the sensing of the gate to source voltage of the power transistor to be controlled. Based on this information the turn on instant of the other power transistor is determined. This guarantees that cross conduction is always avoided with the drawback that any delay in the sensing circuitry translates into longer low-side body diode conduction and therefore into efficiency loss. This efficiency loss increases as the switching frequency increases thus becoming a major limitation for operation at switching frequencies in the order of few to tens of megahertz. As a consequence an alternative approach to optimize dead times is required.

It is therefore the object of the invention to find an alternative approach to optimize dead times for a wide range of power transistors as well as to overcome the above-mentioned limitation of the beak-before-make approach, thus increasing the efficiency of power conversion especially in the case of high switching frequency operation.

The object of the invention will be solved by a method of controlling dead times of a synchronous buck converter comprising the following steps:
- measuring a time a switching node voltage level between a high-side power switch and a low-side power switch of the buck converter is lower than a predetermined voltage threshold at a N switching period;
- comparing said time to a minimum dead time value, resulting in an error value;
- processing the error value by adjusting a programmable reference voltage V_{ref_cp} of a comparator of a dead time management unit and comparing it with a voltage ramp V_{saw} and determining a dead time value to be applied to the N+1 switching period.

Using this principle two major goals are achieved: first the sensing circuitry is greatly simplified by implementing a dead time management unit where the turn on instant of the power transistors is based on sensing the body diode conduction time or the state of the switching node. Secondly, delays in the sensing circuitry no longer affect the performance of the dead time management unit because the determined dead time value is applied to the next (N+1) switching cycle. This in turns relaxes the requirements of the sensing circuitry thus enabling savings in area and power consumption of the dead time management unit.

The proposed method generates an optimum dead time for a wide range of power transistors. The proposed dead time management architecture overcomes the limitation of the break-before-make-approach thus leading to high efficiency power conversion especially with the increase of the switching frequency.

The disclosed method uses a dead time management unit based on the measurement of the time the switching node voltage level is lower than a predetermined voltage threshold. Such voltage threshold is set to a fixed value and can be tuned to meet different power transistor requirements. In general, this voltage threshold needs to be smaller than the voltage drop across the body diode of the power transistor and bigger enough to avoid that the ringing generated by the parasitic during the switching action.

Measurement of the time the switching voltage is lower than a specific voltage threshold approximates in excess the conduction time of the body diode of each power transistor at each switching period. A switching period is also a switching cycle. This time is compared to a reference time window representing the minimum allowed dead time value to avoid cross conduction and body diode conduction. The reference time window is the time duration between a maximum and a minimum value, whereas the minimum value corresponds to the minimum dead time value and the maximum value corresponds to the time the voltage ramp reaches the supply voltage level. The error between the reference time window and the time the switching node voltage level is below the reference voltage at the N switching cycle is processed by the dead time manager that determines the turn on instant of the power transistor to be driven at the N+1 switching cycle. Optimal dead time is achieved when the time the switching node voltage level is lower than the reference voltage matches the minimum allowed dead time. In this way body diode conduction can be avoided by opportunely setting the predetermined voltage threshold for the sensing of the switching node voltage while cross conduction is avoided by imposing a minimum allowed dead time. The minimum allowed dead time value can be set independently for high-side to low-side and low-side to high-side power transistor dead times.

The switching node sensing circuit performing the sensing of the switching node voltage level provides an output pulse that is proportional to the time the body diode is conducting. The capability of this circuit to resolve also few nanosecond pulses is the only strict requirement for the loop to correctly work.

The core of the dead time management unit is a comparator whose inputs are the voltage ramp V_{saw} and the programmable reference voltage V_{ref_cp}, a charge pump based pulse to voltage converter and a latch. The above-mentioned loop is closed by means of the external power stage output that is sensed as described in the previous section.

In an embodiment of the invention the method further comprises adjusting the reference voltage V_{ref_cp} generated out of a charge pump based pulse to voltage converter by constantly reducing the reference voltage V_{ref_cp} according to an amount proportional to the measured output pulse (DWN pulse), whereas at the same time the reference voltage V_{ref_cp} is increased by a fixed reference pulse (UP pulse). In case no DWN pulse is generated (cross-conduction event) the fixed UP pulse would take care of increasing the voltage threshold again thus in turn increasing the dead time.

In a preferred embodiment of the invention the method further comprises setting the fixed reference pulse in the order of hundreds of picoseconds up to a few nanoseconds.

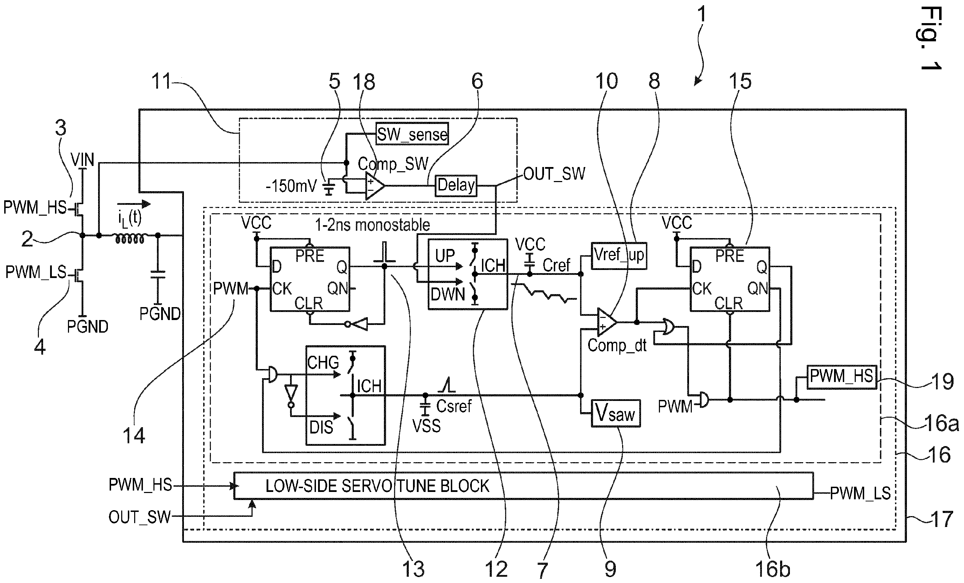

V_{ref_cp} is the reference voltage of the comparator that is constantly adjusted according to the body diode conduction information. The reference voltage is adjusted by means of a charge pump based pulse to voltage converter. The charge pump based pulse to voltage converter reduces the reference voltage of an amount proportional to the time the body diode is conducting (DWN pulse). At the same time the reference voltage is increased by a fixed reference pulse (i.e. 1-2ns UP pulse in figure 1). The comparator output clocks the output latch producing the final PWM signal for the high-side FET.

Once the steady state condition is reached, the UP pulse and DWN pulse will be the same and the reference voltage V_{ref_cp} will not change.

By setting the right amplitude for the fixed reference pulse and by defining the right predetermined voltage threshold for the body diode sensing comparator the body diode conduction is always avoided.

In another preferred embodiment of the invention the method further comprises generating the voltage ramp V_{saw} from a gate driver input PWM signal.

The V_{saw} voltage is a timing ramp generated from the gate driver input pulse-width-modulated (PWM) signal. This ramp is reset every time the comparator output latch is set. The slope of the ramp influences the convergence speed. Therefore, in addition the invention here disclosed allows an adjustment of the speed of convergence of the dead time optimization mechanism to fit different application scenarios.

In another embodiment of the invention the method further comprises resetting the voltage ramp every time the comparator of the dead time management unit clocks an output latch producing a final PWM signal for the high-side switch. This has the effect of uniquely defining the final dead time associated at that specific switching transition.

In another embodiment the method further comprises defining the predetermined voltage threshold of a body diode sensing comparator as an intermediate value between an initial drop across the high-side power switch or the low-side power switch and a corresponding forward body diode drop, respectively. As mentioned above, the body diode conduction is always avoided by setting a proper amplitude for the fixed reference pulse and by defining an optimal voltage threshold for the body diode sensing comparator. The optimal voltage threshold is to be found between the initial drop across the power FET R_{dson} (V_{drop} = R_{dson}*I_{L}) and the forward body diode drop (V_{diode} > 0.6V), whereas I_{L} is the current in the inductor.

In an embodiment of the invention, the fixed reference pulse forces the switching node voltage level to go below ground for a minimum time being the time required for the sensing circuitry to output a pulse by firstly increasing the voltage threshold V_{ref_cp} and then the dead time value until the switching node voltage level is restored to a desired behavior. For example, if for some reasons (due to load change or temperature change) the switching node voltage level is not going below ground, i.e. no body diode conduction occurs, the reference UP pulse will increase the voltage threshold V_{ref_cp} and therefore the dead time value until the switching node voltage level is going and staying below ground for a time greater or equal to the reference time window. The desired behavior is achieved when there is always a pulse being created at the output of the sensing comparator and this pulse has the same time duration as the reference time window.

In another embodiment of the invention, the output pulse is proportional to an amount of time a body diode is conducting.

In a further embodiment of the invention a slope of the voltage ramp V_{saw} influences a convergence speed of the dead time management unit.

The objective of the invention will also be solved by a synchronous buck converter comprising a high-side and a low-side power switch and a gate driver circuit comprising a switching node sensing unit, a dead time management unit, both forming an analog closed-loop servo system performing the method according to the above-mentioned embodiments.

In an embodiment of the synchronous buck converter the dead time management unit comprises a comparator, a charge pump based pulse to voltage converter and a latch.

In a further embodiment of the synchronous buck converter the dead time management unit comprises a servo tune management block for the high-side power transistor and a servo tune management block for the low-side power transistor. Providing a servo tune management block for the high-side and low-side power transistor has the advantage that the dead times between switch on/off pf the high-side and the switch off/on of the low-side switch transistors can be adjusted independently.

In another embodiment of the synchronous buck converter the comparator has inputs of an adjustable reference voltage and a voltage ramp V_{saw}. V_{saw} can also be called timing ramp voltage.

The core of the dead time management unit is a comparator whose inputs are the voltage ramp V_{saw} and the adjustable reference voltage V_{ref_cp}, a charge pump based pulse to voltage converter and a latch.

Summarizing the invention, the invention has the following benefits with respect to state of the art dead time adjustment systems:
The invention optimizes dead times to avoid wastage of energy due to excessive body diode conduction of inherent power transistor body diodes thus improving the overall system efficiency. High frequency operation can be achieved overcoming the limitations of break-before-make dead time control methods, where performance is limited by delays of the sensing circuitry. The turn on instant of power switches / transistors are controlled individually and independently thus breaking the dependency limitation of the break-before make-approach as well. The newly calculated turn on instance of the power transistor is applied to the next switching cycle and therefore delays in the sensing circuitry do not affect the performance of the dead time management unit. The dead time management unit is based on simple sense of the body diode conduction time, whereas the requirements on the speed of the sensing circuitry are relaxed because they do not affect the dead time generation of the current switching period but of the next switching period instead. The analog control loop is employed to determine dead time value leading to higher resolution than digital approaches. The dead times are limited between a max and min value, where min value is the fixed reference impulse used as reference in the dead time control loop and max value is limited by the time the timing ramp voltage reaches the supply voltage. Parameters such as speed of convergence, minimum allowed dead time and decision point of the sensing circuitry can be tailored to fit different application scenarios.

The invention will be described in more details using exemplary embodiments.

The appended drawings show
- Fig. 1: Synchronous buck converter with the inventive analog closed loop servo tune system of a dead time management unit;
- Fig. 2: Output voltage and inductor current of a synchronous buck converter Vᵢₙ=12V, Vₒᵤₜ=1.2V, F_{sw}=500kHz under load transients;
- Fig. 3: a) Output of comparator Comp_dt; b) Dependency of the saw-tooth from the charging current of the capacitor C_{saw};
- Fig. 4: Output of the charge pump in different scenarios: Speed of convergence of the dead time management unit (curve a) can be adjusted by changing the slope at node V_{saw} (curve b) or the charging current at node V_{ref_cp} (curve c) ;
- Fig. 5: UP and DWN pulses of the charge pump once convergence to target dead time values is reached;
- Fig. 6: Curve a: Optimal dead time with the proposed dead time management unit, Curve b: Optimal dead time with a dead time management unit based on the break-before-make approach;
- Fig. 7: High-side and low-side enable signals obtained for the proposed dead time management unit based on the break-before-make approach (Fig. 7a) and for the proposed dead time management unit (Fig. 7b).

The following described figures illustrate the behavior of disclosed dead time management system for a buck converter operating at 500 kHz with Vᵢₙ=12V and Vₒᵤₜ=1.2V.

Figure 1 shows the synchronous buck converter 1 and a gate driver 17 comprising a dead time management unit 16. The dead time management unit 16 comprises a switching node sensing circuit 11 and a servo tune management block circuit 16a and 16b, one 16a for the high-side power transistor and one 16b for the low-side power transistor. The servo tune management block circuit 16a respectively comprises a charge pump based pulse to voltage converter 12, a comparator 10 and a latch 15. The switching node sensing circuit 11 provides an output pulse 6 that is proportional to the amount of time the body diode is conducting. The capability of this circuit to resolve also few nanosecond pulses is the only strict requirement for the loop to correctly work. The V_{saw} voltage 9 is a timing ramp voltage generated from the gate driver input PWM 14. This ramp 9 is reset every time the comparator output latch 15 is set. The slope of the ramp 9 influences the convergence speed. V_{ref_cp} is the reference voltage 8 of the comparator that is constantly adjusted according to the body diode conduction information. The reference voltage 8 is adjusted by means of a charge pump. The charge pump reduces the reference voltage 8 of an amount proportional to the time the body diode is conducting (DWN pulse). At the same time the reference voltage 8 is increased by a fixed reference pulse (i.e. 1-2ns UP pulse in figure 1). The comparator 10 output clocks the output latch 15 producing the final PWM signal for the high-side FET.

The body diode conduction is always avoided by setting an optimal duration for the fixed reference pulse and by defining an optimal voltage threshold 5 for the body diode sensing comparator 18. The former usually is in the order of hundreds of picoseconds up to few nanoseconds. The latter is in an intermediate value between the initial drop across the power FET Rdson (Vdrop = Rdson*I_{L}) and the forward body diode drop (V_{diode} > 0.6V). In figure 1 the predetermined voltage threshold 5 is set to 150mV below power ground. At the same time, the shoot through is always avoided by means of the fixed reference pulse 13 that force the switching node to go below ground just the time required to sense it.

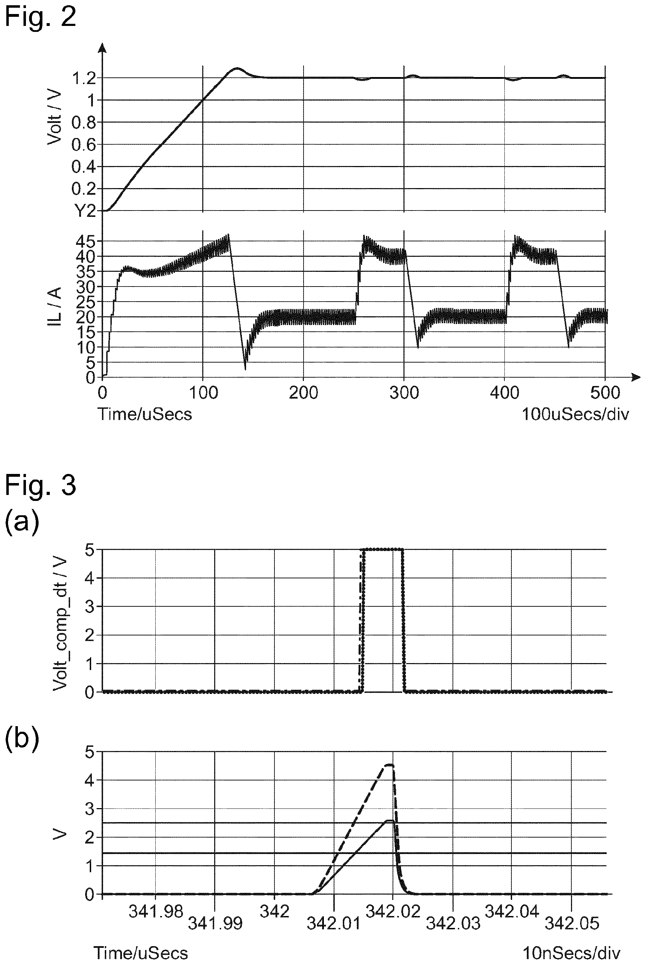

Figure 2 shows the performed simulation, with the ramping of the output voltage and the applied load steps. I_{L} is the current in the inductor. Vₒᵤₜ is the regulated voltage. The output current is modulated to illustrate the behavior of the dead time management unit during load transients.

Figure 3b shows how the V_{saw} behaves when a different charging current is used for the saw-tooth ramp (the dashed ramp is double in respect to the solid curve). The pointed and dashed-pointed signals in figure 3a represent the output of the comparator 10 Comp_dt that is used to define the dead time to be applied.

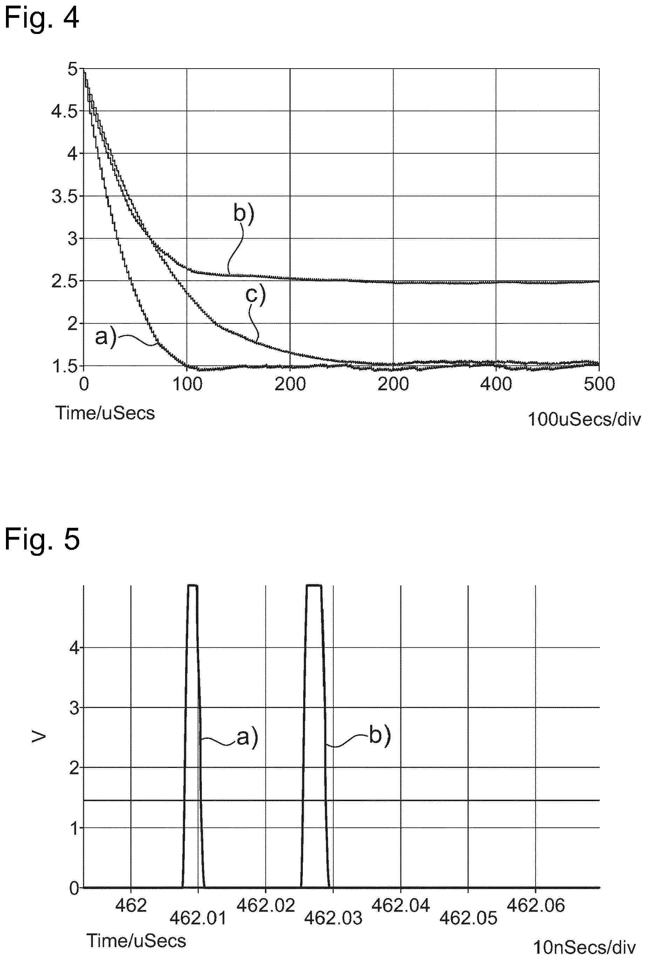

In Figure 4 it is possible to observe the effect of changing the slope of the saw-tooth and of changing the current gain of the charge pump based pulse to voltage converter 12 on the convergence speed and reference voltage. Curve a) represents the system with normal slope and current gain. Curve c) shows the scenario with half current gain, whereas it takes more time to settle. Curve b) shows the system with faster slope, whereas the reference voltage settles to a higher voltage.

Figure 5 shows the UP and DWN pulses of the charge pump based pulse to voltage converter 12 once the convergence is reached. Theoretically they should be the same, but in reality the DWN pulse needs to compensate also for some "losses" or injections due to the switching activity. The curve between 1V and 2V represents the output of the charge pump. If the convergence is reached, the output is charged and discharged by the same quantity and the reference voltage does not change.

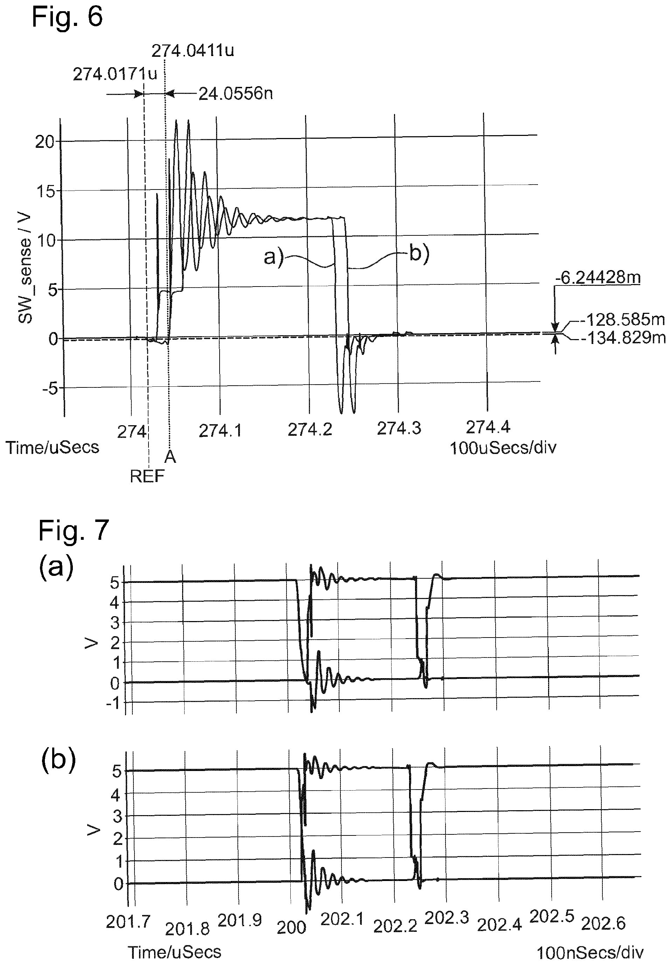

Figure 6 and Figure 7 show the effect of the disclosed dead time management unit on the switch node and on the V_{GS} of the high-side and low-side power FET. It is possible to observe the difference with respect to the break-before-make approach.

Summarizing the invention, the invention has the following benefits with respect to state of the art dead time management units:
The invention optimizes dead times to avoid wastage of energy due to excessive body diode conduction thus improving the overall system efficiency. High frequency operation is achieved overcoming the limitations of break-before-make dead time control methods, where performance is limited by delays of the sensing circuitry. The turn on instant of power transistors are controlled individually and independently thus breaking the dependency limitation of the break-before-make approach as well. The newly calculated turn on instance of the power transistor is applied to the next switching cycle and therefore delays in the sensing circuitry do not affect the performance of the dead time management unit. The dead time management unit is based on simple sense of the body diode conduction time, whereas the requirements on the speed of the sensing circuitry are relaxed because they do not affect the generation of dead times in the current switching period but the one in the next switching period instead. The analog control loop is employed to determine dead time values leading to higher resolution than digital approaches. The dead times are limited between a max and min value, where min value is the fixed reference impulse used as reference in the loop and max value is limited by the time the timing ramp voltage reaches the supply voltage. Parameters such as speed of convergence, minimum allowed dead time and decision point of the sensing circuitry can be tailored to fit different application scenarios.

### List of reference signs

- 1: synchronous buck converter with dead time control unit
- 2: switching node
- 3: high-side power switch or transistor
- 4: low-side power switch or transistor
- 5: predetermined voltage threshold
- 6: output pulse
- 7: error value expressed as duration of the pulse output by the charge pump
- 8: adjustable reference voltage
- 9: timing ramp voltage
- 10: comparator of a dead time management unit
- 11: switching node sensing circuit
- 12: charge pump based pulse to voltage converter
- 13: a fixed reference pulse
- 14: gate driver input PWM signal
- 15: output latch
- 16: dead time management unit, servo tune management block circuit
- 16a: servo tune management block for high-side power transistor
- 16b: servo tune management block for low-side power transistor
- 17: a gate driver circuit
- 18: body diode sensing comparator
- 19: PWM signal to the high-side switch

## Claims

1. A method of controlling dead times of a synchronous buck converter comprising:
- measuring a time a switching node voltage level (2) between a high-side power switch (3) and a low-side power switch (4) of the buck converter is lower than a predetermined voltage threshold (5) at a N switching period;
- comparing said time to a minimum dead time value, resulting in an error value;
- processing the error value (7) by adjusting a programmable reference voltage V_{ref_cp} (8) of a comparator (10) of a dead time management unit (16) and comparing it with a voltage ramp V_{saw} (9) and determining a dead time value to be applied to the N+1 switching period.

2. The method according to claim 1, further comprising adjusting the reference voltage V_{ref_cp} (8) generated out of a charge pump based pulse to voltage converter (12) by constantly reducing the reference voltage V_{ref_cp} (8) according to an amount proportional to the measured output pulse (6), whereas at the same time the reference voltage is increased by a fixed reference pulse.

3. The method according to claim 2, further comprising setting the fixed reference pulse in the order of hundreds of picoseconds up to a few nanoseconds.

4. The method according to claim 1, further comprising generating the voltage ramp V_{saw} (9) from a gate driver input PWM signal (14).

5. The method according to claim 4, further comprising resetting the voltage ramp (9) every time the comparator (10) of the dead time management unit (16) clocks an output latch (15) producing a final PWM signal (19) for a power transistor to be driven.

6. The method according to claim 1, further comprising a definition of the predetermined voltage threshold (5) of a body diode sensing comparator (18) as an intermediate value between an initial drop across the high-side power switch (3) or the low-side power switch (4) and a corresponding forward body diode drop, respectively.

7. The method according to claim 1, wherein the fixed reference pulse forces the switching node voltage level to go below ground for a minimum time required to sense the output pulse (6) by firstly increasing the predefined voltage threshold (5) and then the dead time value until the switching node voltage level (2) is restored to follow a desired behavior.

8. The method according to claim 1, wherein the output pulse (6) is proportional to an amount of time a body diode is conducting.

9. The method according to one of the former claims, wherein a slope of the timing ramp voltage influences a convergence speed of the dead time management unit (16).

10. Synchronous buck converter comprising a high-side (3) and a low-side power switch (4) and a gate driver circuit (17) comprising a switching node sensing unit (11), a dead time management unit (16), both forming an analog closed-loop servo system performing the method according to claims 1 to 9.

11. Synchronous buck converter according to claim 10, wherein the dead time management unit (16) comprises a comparator (10), a charge pump based pulse to voltage converter (12) and a latch (15).

12. Synchronous buck converter according to claim 11, wherein the dead time management unit (16) comprises a servo tune management block (16a) for the high-side power transistor (3) and a servo tune management block (16b) for the low-side power transistor (4).

13. Synchronous buck converter according to claim 11, wherein the comparator (10) has inputs of an adjustable reference voltage (8) and a timing ramp voltage (9).
